# FASCICULE DE BREVET EUROPEEN

(11) **EP 3 242 188 B1**
(45) Date de publication et mention de la délivrance du brevet: **28.11.2018**
(21) Numéro de dépôt: 17168301.4
(22) Date de dépôt: 26.04.2017
(51) Int. Cl.: G06F 3/023, H04M 1/725, G06F 3/0488, G06F 17/24, G06F 3/0482, G06F 3/0485, H04L 12/58

(54) **PROCEDE ET DISPOSITIF DE GESTION SIMULTANEE D'UNE PLURALITE DE MESSAGES**
VERFAHREN UND GERÄT ZUR SIMULTANEN VERWALTUNG VON MEHREREN NACHRICHTEN
METHOD AND DEVICE FOR SIMULTANEOUS MANAGEMENT OF A PLURALITY OF MESSAGES

(30) Priorité: 02.05.2016 FR 1653953
(43) Date de publication de la demande: 08.11.2017
(73) Titulaire: Orange, 75015 Paris (FR)
(72) Inventeur: FLOURY, Cedric, 22700 PERROS GUIRREC (FR)
(74) Mandataire: Delumeau, François Guy

(56) Documents cités:
- EP-A1- 2 244 430
- EP-A1- 2 571 234
- US-A1- 2004 268 263
- US-A1- 2015 350 143

## Description

### Arrière-plan

L'invention se situe dans le domaine général des systèmes de messagerie. Dans ce contexte il est fait référence aux documents d'art antérieur US 2015/350143 A1 et EP 2 244 430 A1.

Elle concerne plus particulièrement la gestion simultanée d'une pluralité de messages destinés à être envoyés à un ou plusieurs destinataires.

Les utilisateurs de téléphones et notamment de Smartphones sont souvent amenés à échanger des messages avec leurs contacts via des services de messageries (SMS ou applications dédiées). En particulier, la démocratisation des téléphones a résulté en un nombre de messages échangés potentiellement élevés, et il n'est pas toujours simple pour un utilisateur de pouvoir suivre le fil d'une conversation.

Parmi les problématiques rencontrées dans l'usage des services de messagerie, celle des « messages croisés » est très fréquente. En effet, il arrive lors de la rédaction par un utilisateur A d'un message à destination d'un contact B que ce même contact B envoie au même moment un message à l'utilisateur A. Dès lors, le message en cours de rédaction par l'utilisateur A peut ne plus être approprié, ou bien l'utilisateur A peut souhaiter répondre d'abord au dernier message reçu du contact B avant de reprendre la rédaction du message initial.

À titre d'illustration, conformément à l'état de l'art, deux utilisateurs A et B peuvent se retrouver dans la situation suivante :
- L'utilisateur A envoie un premier message à l'utilisateur B : « Tu vas au match ce soir ? »
- L'utilisateur B commence alors à rédiger une réponse « Je ne pense pas car »
- L'utilisateur A envoie alors un second message à l'utilisateur B « Tu sais si Eric sera là ? »

Si l'utilisateur B souhaite répondre uniquement à la deuxième question, il devra effacer ou copier le message en cours de saisie. Il devra ensuite rédiger un autre message, puis s'il veut répondre à la première question, il devra saisir de nouveau son message initial et le finir, ou alors le coller dans la zone de saisie si ce dernier a été préalablement copié. Cette opération peut paraître fastidieuse, notamment en considérant que la situation associée se présente fréquemment.

La présente invention vise une application de messagerie qui ne présente pas les inconvénients de l'art antérieur.

### Objet et résumé de l'invention

Ainsi et selon un premier aspect, l'invention concerne un procédé de gestion simultanée d'une pluralité de messages, mis en oeuvre par un dispositif, chacun desdits messages étant destiné à au moins un destinataire, chacun des messages étant édité dans une zone de saisie sélectionnée dédiée à ce message, chacune de ces zones étant représentée comme une partie d'un même conteneur, ledit conteneur constituant un objet graphique dans lequel un utilisateur peut éditer un contenu, la gestion d'un desdits messages comportant :
- une étape de création dynamique d'une zone de saisie associée à ce message dans le conteneur ;
- une étape de sélection de la zone créée ; et
- une étape d'édition du message dans la zone sélectionnée ;
un envoi du message à son ou à ses destinataire(s) effaçant le contenu de la zone sélectionnée contenant ce message, les contenus des zones de saisie dédiés aux autres messages restant inchangés.

Corrélativement, l'invention concerne un dispositif de gestion simultanée d'une pluralité de messages, chacun pouvant être destiné à au moins un destinataire, chacun des messages étant édité dans une zone sélectionnée dédiée à ce message, chacune de ces zones étant représentée comme une partie d'un même conteneur, ledit conteneur constituant un objet graphique dans lequel un utilisateur peut éditer un contenu, le module de gestion d'un desdits messages comportant :
- un module de création dynamique d'une zone associée à ce message dans le conteneur ;
- un module de sélection de la zone créée ; et
- un module d'édition du message dans la zone sélectionnée ;
un envoi du message à son au moins un destinataire effaçant le contenu de la zone sélectionnée contenant ce message, les contenus des zones de saisie dédiés aux autres messages restant inchangés.

Un conteneur est un élément d'une interface graphique dans lequel un utilisateur peut éditer un contenu, comme du texte, des images ou encore des vidéos. L'utilisateur peut par exemple saisir un texte au moyen d'un clavier, éventuellement physique (réel) ou virtuel par exemple tactile, ou dicter un message par l'intermédiaire d'un microphone après avoir positionné son curseur. Il peut également insérer un contenu multimédia comme des images ou des vidéos, par exemple au moyen d'autres éléments graphiques, comme des boutons, La taille d'un conteneur peut éventuellement varier. Elle peut par exemple augmenter lorsque son contenu s'agrandit (texte plus long, plusieurs contenus multimédias, etc.).

Une zone de saisie correspond graphiquement à une partie ou à l'intégralité du conteneur, et le contenu qui lui est dédié est destiné à être envoyé au sein d'un message à au moins un destinataire. Un message est donc associé à une unique zone de saisie, et le conteneur permet de saisir un ou plusieurs messages. La taille et la position d'une zone de saisie n'est pas fixe dans le conteneur, et peut évoluer, comme expliqué ultérieurement. Une zone de saisie peut également être amenée à disparaître visuellement du conteneur, sans pour autant que le contenu qui lui est associé soit effacé.

La création d'une zone de saisie peut être effectuée dynamiquement, c'est-à-dire à tout moment, selon le besoin de l'utilisateur. Cette création entraîne une allocation dynamique d'un espace mémoire destiné à stocker le contenu saisi dans la zone. Chaque zone de saisie pointe donc vers un espace mémoire qui lui est propre. La taille de l'espace mémoire alloué à une zone peut augmenter dynamiquement avec la taille du contenu.

La sélection d'une zone de saisie a pour effet que le contenu édité dans cette zone soit stocké dans l'espace mémoire dédié à cette zone. Cette sélection se traduit par exemple graphiquement par l'apparition d'un curseur dans la zone de saisie.

Lors de l'envoi d'un message associé à une certaine zone de saisie, le contenu de cette zone est effacé, mais les contenus des autres zones de saisies restent inchangés.

Ainsi, un utilisateur peut avantageusement éditer autant de messages qu'il y a de zones de saisie dans un unique conteneur, et envoyer chacun des messages indépendamment les uns des autres et dans l'ordre qu'il souhaite.

Autrement dit, les contenus des messages, notamment ceux en cours d'édition, sont gardés en mémoire puis finalisés et envoyés à la demande.

Dans un mode particulier de réalisation, l'étape de création dynamique et l'étape de sélection de la zone associée au message sont simultanées.

Ainsi, lors de l'allocation de l'espace mémoire simultanée à l'apparition de la zone de saisie associée, l'utilisateur peut immédiatement éditer un contenu qui y sera stocké, lui évitant une action supplémentaire.

Dans un mode particulier de réalisation, pour la gestion d'au moins un message, l'étape de création dynamique de la zone peut s'effectuer :
- par une action d'au moins un pointeur sur une interface ; ou
- automatiquement, lors de l'ouverture d'une application de messagerie mettant en oeuvre le procédé.

L'interface peut être une interface tactile permettant d'afficher l'application mettant en oeuvre le procédé.

Ainsi, l'utilisateur peut créer une nouvelle zone de saisie au moyen d'un pointeur par une action comme un contact (en anglais « tap »), un double-contact (en anglais « double-tap ») ou un glissement sur cette interface.

La création d'une zone de saisie peut également se faire de manière automatique lors de l'ouverture de l'application, évitant à l'utilisateur de créer lui-même cette zone et permettant donc un gain de temps.

Dans un mode particulier de réalisation, au moins une des zones de saisie peut être détruite, cette destruction pouvant s'effectuer :
- par une action d'au moins un pointeur sur une interface ;
- automatiquement, lors de l'envoi d'un message associé à cette zone ; ou
- automatiquement, lors de la fermeture d'une application de messagerie mettant en oeuvre le procédé.

Dans un mode particulier de réalisation, l'étape de sélection d'une zone comporte :
- une étape de défilement des zones dans le conteneur ; et
- une étape de pointage de la zone à sélectionner.

Le défilement des zones de saisie dans le conteneur permet à l'utilisateur de les visualiser les unes à la suite des autres, et éventuellement d'en visualiser plusieurs en même temps. Le pointage de l'une de ces zones permet alors de la sélectionner pour pouvoir en éditer le contenu.

Dans un mode particulier de réalisation, l'étape de défilement correspond à une étape de translation des zones dans le conteneur, cette translation étant effectuée par un mouvement de glissement d'au moins un pointeur sur le conteneur.

En effectuant un mouvement de glissement du pointeur sur le conteneur, ou mouvement de « Slide », le contenu du conteneur défile dans le sens de ce mouvement, faisant apparaître les différentes zones de saisies. L'utilisateur peut ainsi intuitivement faire défiler les différentes zones dans le but d'en sélectionner puis d'en éditer une.

Dans un mode particulier de réalisation, la translation est effectuée selon la direction de saisie.

Cette direction peut par exemple correspondre à la direction de saisie des caractères. Le sens de la translation peut quant à lui être quelconque (vers la gauche ou la droite).

Dans un mode particulier de réalisation, l'étape de défilement correspond à une étape d'affichages successifs de chacune des zones dans l'ensemble du conteneur, l'affichage de la zone suivante pouvant s'effectuer :
- par un contact d'au moins un pointeur sur au moins un bouton virtuel ou réel (physique) d'une interface ; ou
- par un double-contact d'au moins un pointeur sur le conteneur.

Dans ce mode de réalisation, une zone de saisie occupe l'ensemble du conteneur, et l'utilisateur peut passer d'une zone à une autre en agissant sur l'interface de l'application mettant en oeuvre le procédé. Cette interface peut être de type tactile.

Dans un mode particulier de réalisation, l'étape de pointage peut s'effectuer :
- par au moins un contact d'au moins un pointeur sur la zone créée; ou
- automatiquement, lorsque la zone créée occupe au moins une majeure partie du conteneur.

Dans le premier cas, l'utilisateur, en se positionnant avec le pointeur sur la zone de saisie qu'il veut sélectionner, adresse l'espace de stockage dédié à cette zone.

Dans le second cas, lorsque la zone de saisie occupe une majeure partie du conteneur ou même l'ensemble du conteneur, et qu'elle correspond donc à la zone la plus visible par l'utilisateur, le pointage peut s'effectuer de manière automatique sur cette zone, évitant ainsi à ce dernier une action supplémentaire.

Cette étape de pointage peut se traduire par l'apparition d'un curseur dans la zone de saisie.

Dans un mode particulier de réalisation, le pointeur peut consister en :
- un doigt ; ou
- un stylet.

Dans un mode particulier de réalisation, les différentes étapes du procédé de gestion d'une pluralité de messages sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre du procédé de gestion d'une pluralité de messages telle que mentionnée ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### BREVE DESCRIPTION DES FIGURES

D'autres caractéristiques et avantages de l'invention apparaîtront à la lecture de la description qui suit, faite en référence aux dessins annexés dans lesquels :
- les figures 1 et 2 représentent des étapes d'un procédé de gestion d'une pluralité de messages conforme à l'invention selon des modes de réalisation ;
- les figures 3A à 6B reproduisent des exemples de représentations graphiques d'une application mettant en oeuvre le procédé ; et
- les figures 7 et 8 représentent des dispositifs de gestion d'une pluralité de messages conformes à l'invention.

### DESCRIPTION DETAILLEE DE MODES DE REALISATION

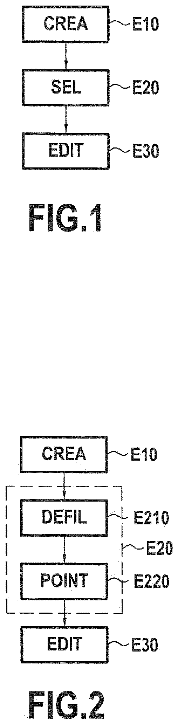

La **figure 1** représente un procédé de gestion simultanée d'une pluralité de messages conforme à l'invention.

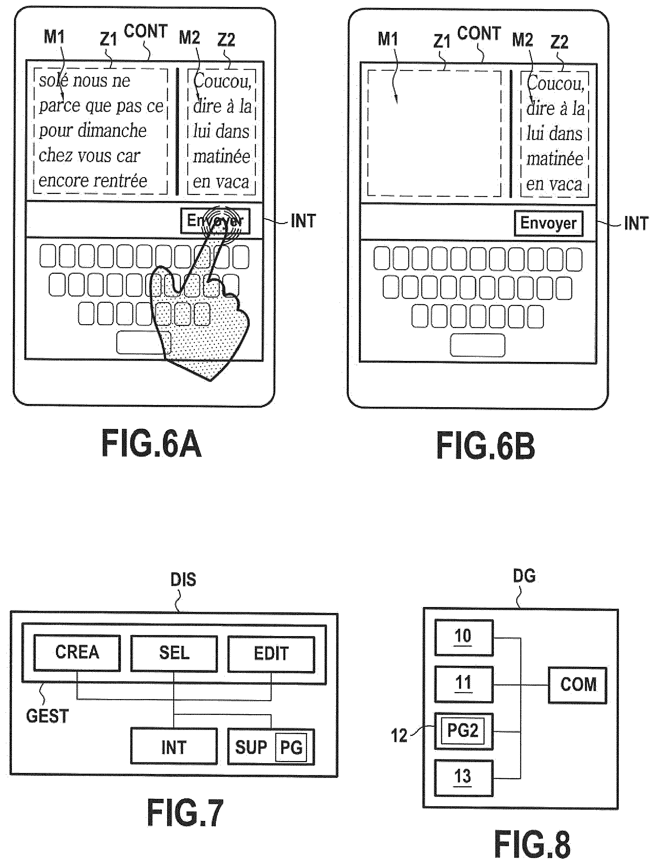

Ce procédé est mis en oeuvre par un dispositif DIS d'un utilisateur représenté à la figure 7, et comporte une première étape E10 de création dynamique d'une zone de saisie Z1 dans un conteneur CONT, cette zone Z1 de saisie étant associée ou destinée à être associée à un message M1.

Le conteneur CONT correspond à un objet graphique dans lequel un utilisateur peut saisir du contenu. Ce contenu peut être sous la forme d'un texte, de photos ou de vidéos.

Le conteneur CONT peut graphiquement être représenté sous forme de rectangle, dont la taille peut éventuellement varier en fonction de la quantité de contenu présent en son sein ou en fonction d'autres paramètres.

Généralement, ce conteneur CONT se situe à proximité d'un clavier numérique physique ou virtuel permettant à l'utilisateur de saisir des caractères. D'autres objets graphiques à proximité, comme des boutons virtuels, peuvent également permettre d'insérer du contenu dans le conteneur, comme des photos ou des vidéos, qu'elles soit initialement stockées dans la mémoire du téléphone, ou qu'elles soit acquises au cours de l'édition du contenu.

Ces éléments graphiques peuvent être affichés sur une interface graphique INT, préférablement tactile, du dispositif DIS. Cette interface INT affiche une application de messagerie conforme à l'invention et mettant en oeuvre le procédé de gestion simultanée d'une pluralité de messages.

La zone de saisie Z1 correspond à une zone visuelle délimitée comprise dans le conteneur CONT, dans laquelle peut être saisi un contenu correspondant à un message M1. Le conteneur CONT peut contenir plusieurs zones de saisie Z1, Z2.

Deux zones de saisie peuvent être visuellement délimitées, par exemple par un objet graphique comme une ligne continue ou une ligne pointillée.

La position des zones de saisie dans le conteneur peut évoluer au cours du procédé. Cette évolution sera décrite ultérieurement.

La création d'une zone de saisie Z1 entraine la création d'un contenu d'un nouveau message M1 pouvant être édité dans cette zone.

La zone de saisie Z1 peut être créée dynamiquement, par exemple lorsque l'utilisateur appuie sur un objet graphique de l'interface INT comme un bouton, par exemple un bouton « + » ou « Ajouter zone de saisie », ou encore par un mouvement d'un pointeur sur l'interface INT, par exemple un mouvement de doigt. Par exemple, l'utilisateur peut effectuer un mouvement de glissement du pointeur dans le conteneur entraînant une translation du contenu et faisant apparaître une nouvelle zone de saisie ainsi créée.

L'utilisateur peut créer une ou plusieurs nouvelles zones de saisie à la demande, autrement dit lorsqu'il en a besoin, et à tout moment.

L'ouverture de l'application de messagerie mettant en oeuvre le procédé peut également permettre de créer automatiquement une ou plusieurs zones de saisie, directement affichées dans le conteneur CONT.

La création d'une zone de saisie entraîne l'allocation dynamique d'un espace de stockage qui lui est dédié. Par conséquent, chaque zone de saisie pointe vers un espace de stockage qui lui est propre.

Dans ce mode de réalisation, cette allocation se fait de manière dynamique. Ainsi, chaque nouveau caractère saisi par l'utilisateur ou chaque nouvelle photo ou vidéo insérée par l'utilisateur est stockée dynamiquement dans l'espace de stockage dédié à la zone.

L'étape E10 de création dynamique d'une zone de saisie est suivie d'une étape E20 de sélection de la zone Z1 créée.

L'utilisateur sélectionne la zone Z1 dans laquelle il veut éditer du contenu. Cette étape E20 de sélection sera détaillée en référence à la figure 2.

L'étape E20 de sélection est suivie d'une étape E30 d'édition du message M1 dans la zone Z1 précédemment sélectionnée.

Une fois la zone Z1 sélectionnée, l'utilisateur peut alors éditer, saisir, rajouter ou supprimer du contenu dans cette zone.

Comme expliqué précédemment, la particularité d'une zone de saisie est qu'elle est dédiée à un unique message. Ainsi lors de l'envoi d'un message M1 à un destinataire, par exemple par l'appui d'un pointeur sur un bouton « Envoyer », seul le contenu associé à la zone Z1 sélectionnée associé à ce message M1 sera effacé, mais le contenu des autres zones de saisie Z2 associé à d'éventuels autres messages M2 restera inchangé dans le conteneur CONT, comme illustré aux figures 6A et 6B.

Dans un mode de réalisation particulier de l'invention, l'étape de création dynamique et l'étape de sélection de la zone associée au message à envoyer sont simultanées.

Ainsi, lors de l'allocation de l'espace mémoire, simultanée à l'apparition de la zone de saisie associée, on se place automatiquement dans cet espace et l'utilisateur peut immédiatement éditer un contenu qui y sera stocké, lui évitant ainsi toute action supplémentaire.

Dans ce mode de réalisation, lorsque l'utilisateur crée la zone de saisie, un curseur peut apparaître dans cette zone.

Conformément à l'invention, les zones de saisie peuvent également être détruites en réponse à une action de l'utilisateur ou automatiquement.

La destruction d'une zone de saisie peut s'effectuer par l'action d'un pointeur sur le conteneur, lors de l'envoi d'un message associé à cette zone, ou lors de la fermeture d'une application de messagerie mettant en oeuvre le procédé.

Par exemple, l'utilisateur peut initier la destruction d'une zone en appuyant sur un objet graphique, comme un bouton, par exemple un bouton « - » ou « Supprimer zone de saisie » ou encore en effectuant un mouvement de glissement d'un pointeur sur l'interface tactile représentant l'application mettant en oeuvre le procédé.

Par exemple, un mouvement de glissement vers le bas ou vers le haut peut permettre d'effacer le contenu d'une zone.

Le contenu d'une zone peut également s'effacer de manière automatique lors de l'envoi du message associé à cette zone, auquel cas l'utilisateur n'a pas d'action supplémentaire à effectuer.

Le contenu peut également s'effacer de manière automatique lors de la fermeture de l'application mettant en oeuvre le procédé, et cette caractéristique peut par exemple être laissée au choix de l'utilisateur dans les réglages de cette application.

En référence à la **figure 2****,** nous allons à présent décrire plus en détail les différentes étapes (E10 à E30) d'un procédé de gestion d'une pluralité de messages conformes à l'invention.

Les étapes E10 et E30 de ce procédé sont similaires aux étapes E10 et E30 décrites en référence à la figure 1.

L'étape E20 de sélection de la zone créée dans l'étape E10 se décompose en deux sous-étapes E210 et E220.

L'étape E210 constitue une étape de défilement des zones de saisie dans le conteneur.

Ce défilement permet à l'utilisateur de visualiser chacun des contenus des différentes zones de saisies Z1, Z2 les unes à la suite des autres pour pouvoir sélectionner celle de son choix. Ces zones Z1, Z2 et leurs messages associés M1, M2 peuvent être visibles simultanément dans le conteneur CONT.

Dans un mode particulier de réalisation, ce défilement correspond à une translation TRANS des zones de saisie dans ledit contenu, cette translation TRANS étant effectuée par un mouvement de glissement d'un pointeur dans le conteneur CONT.

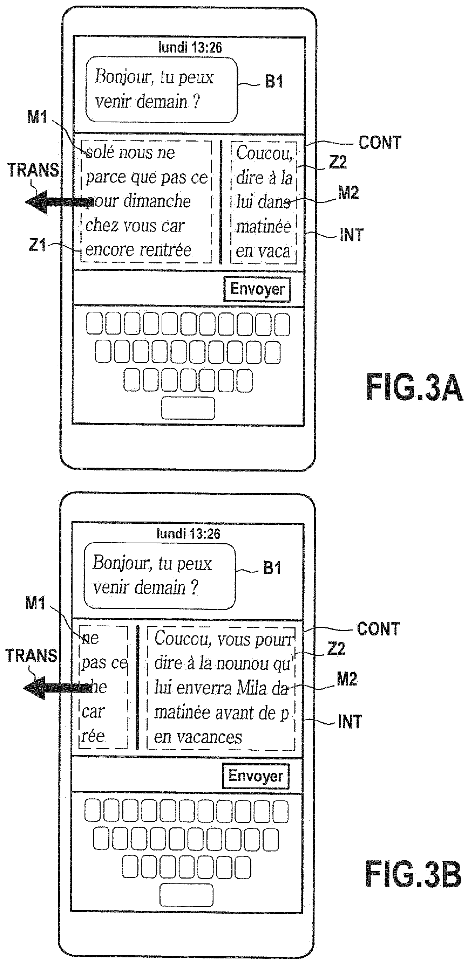

Ce mode de réalisation est illustré aux figures 3A et 3B.

Par exemple, l'utilisateur peut effectuer un mouvement de « Slide » avec son doigt sur le conteneur CONT.

Dans la **figure 3A****,** l'interface graphique INT représente l'application mettant en oeuvre le procédé. L'utilisateur peut visualiser les messages précédemment envoyés, par exemple dans des « bulles » B1, un clavier de saisie virtuel, ainsi que le conteneur CONT contenant une ou plusieurs zones de saisie Z1, Z2.

Sur cette première figure 3A, deux zones de saisie Z1 et Z2 contenant respectivement les messages M1 et M2 sont visibles dans le conteneur CONT. Les zones Z1 et Z2 sont positionnées l'une à côté de l'autre dans la direction de saisie des caractères (ici horizontale), et sont séparées par une ligne continue verticale.

La flèche TRANS illustre la translation des zones de saisie Z1, Z2 lors d'un mouvement de glissement d'un doigt ou d'un stylet dans le rectangle correspondant au conteneur CONT.

Un tel mouvement de glissement entraîne l'affichage successif des différentes zones créées, comme par exemple la zone Z2 contenant le message M2 représentée à la **figure 3B****.**

Sur ces figures, on remarque que la position et la taille des zones de saisie Z1 et Z2 au sein du conteneur évolue en même temps que le mouvement de glissement, comme évoqué précédemment. En effet, la zone Z1 occupant visuellement la majeure partie du conteneur est ensuite en partie remplacée par la zone Z2.

Ce mouvement entraine donc la disparition visuelle des contenus des zones non visibles dans le conteneur CONT mais n'impacte en rien ces contenus qui sont conservés en mémoire.

Dans un mode de réalisation, le nombre de zones de saisie pouvant être créées et observées peut ne pas être limité dans le conteneur.

Le mouvement de glissement n'est pas limité en direction ou en sens.

Le positionnement des zones de saisie dans le conteneur n'est également pas limité à celui représenté sur les figures 3A et 3B et pourrait être différent.

Dans un autre mode de réalisation, l'étape de défilement des zones de saisie correspond à une étape d'affichage successif de chacune des zones de saisie dans l'ensemble du conteneur CONT.

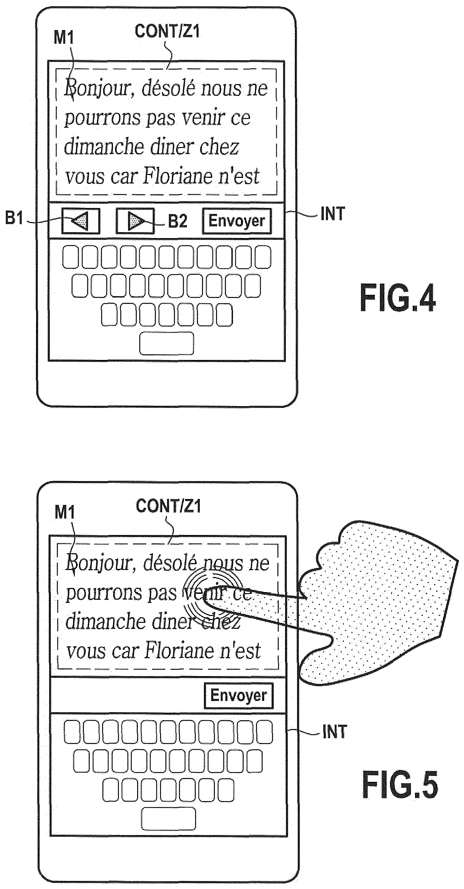

Ce mode de réalisation est par exemple représenté aux figures 4 ou 5.

Dans ce mode de réalisation, une seule zone de saisie Z1 occupe l'ensemble du conteneur CONT.

Le passage d'une zone à une autre peut s'effectuer par contact d'au moins un pointeur sur un ou plusieurs boutons de l'interface tactile. Par exemple et comme illustré à la **figure 4****,** l'utilisateur peut naviguer entre les zones de saisie par l'intermédiaire des boutons B1 ou B2.

Le passage d'une zone à une autre peut également s'effectuer par un double-contact (ou double-clic) d'au moins un pointeur sur le conteneur. Cet exemple est illustré à la **figure 5****.** Ainsi, lorsque l'utilisateur effectue un double-contact sur le conteneur avec un stylet ou avec un ou plusieurs doigts, la zone de saisie Z1 associée au message M1 disparaît et est remplacée par une autre zone de saisie associée à un autre message.

L'étape E210 de défilement des zones de saisie dans le conteneur est suivie d'une étape E220 de pointage de la zone créée à l'étape E10.

Cette étape permet à l'utilisateur de sélectionner une zone parmi toutes les zones existantes pour pouvoir y éditer du contenu.

Cette étape de pointage peut s'effectuer par au moins un contact d'au moins un pointeur sur la zone créée, comme il est courant de faire dans une application de messagerie classique, ou automatiquement, lorsque la zone créée occupe au moins une majeure partie du conteneur.

Dans la première option, un contact du pointeur avec la zone permet d'accéder à l'espace de stockage dédié à cette zone. L'utilisateur peut alors saisir un contenu qui sera directement stocké dans cet espace.

Dans la deuxième option, lorsque la zone de saisie occupe l'ensemble du conteneur, ou qu'elle est majoritaire sur ce conteneur (et donc majoritairement visible par l'utilisateur), la zone est automatiquement pointée, et l'espace de stockage automatiquement lié. Ainsi, l'utilisateur n'a pas à effectuer d'action supplémentaire avant de saisir un contenu.

Cette étape de pointage peut se traduire par l'apparition dans la zone de saisie d'un curseur comme connu dans l'état de l'art.

Les **figures 6A** et **6B** représentent toutes deux graphiquement une interface INT d'un dispositif DIS associé à une application mettant en oeuvre le procédé selon l'invention.

La figure 6A correspond à une situation précédant l'envoi d'un message M1 contenu dans une zone Z1. La figure 6B correspond à une situation suivant l'envoi de ce message M1.

Dans la figure 6A, le contenu des zones Z1 et Z2 s'affichent et sont donc consultables et éditables par l'utilisateur.

Une fois la zone Z1 sélectionnée et après avoir appuyé sur le bouton virtuel « Envoyer » de l'interface tactile INT, le contenu de la zone Z1 s'efface simultanément à l'envoi du message M1 contenu dans cette zone. La zone Z1 quant à elle ne se détruit pas nécessairement.

Le message M2 contenu dans la zone Z2 reste lui inchangé, comme représenté à la figure 6B, et l'utilisateur peut alors consulter et éditer le contenu de ce message M2.

La **figure 7** représente un dispositif DIS de gestion simultanée d'une pluralité de messages conformes à l'invention.

Ce dispositif DIS peut consister en un téléphone, un Smartphone, ou une tablette.

Ce dispositif DIS comporte un module GEST de gestion d'un message.

Ce module de gestion GEST comporte lui-même trois modules.

Le premier module CREA permet de créer dynamiquement une zone Z1 associée ou destinée à être associée au message M1 à envoyer, dans le conteneur CONT.

Le module SEL permet de sélectionner la zone Z1 précédemment créée.

Le module EDIT permet d'éditer le message M1 dans la zone Z1 précédemment sélectionnée.

Le dispositif DIS comporte également une interface INT pouvant permettre d'afficher l'application mettant en oeuvre le procédé, et pouvant également être une interface tactile permettant à l'utilisateur d'agir sur l'application, en créant des zones, en les éditant ou en envoyant les messages associés à ces zones, au moyen d'un ou plusieurs pointeurs comme un stylet ou un doigt.

Le dispositif DIS comporte enfin un support d'enregistrement SUP dans lequel est stocké un programme PG comportant des instructions permettant de mettre en oeuvre le procédé.

Dans le mode de réalisation décrit ici, le dispositif de gestion DIS possède l'architecture matérielle d'un ordinateur, telle que représentée schématiquement à la **figure 8****.**

Le dispositif de gestion DIS comporte ainsi un processeur 10, une mémoire non volatile réinscriptible 11, une mémoire morte de type ROM (pour « Read-only memory », en anglais) 12, une mémoire vive de type RAM (pour « Random-access memory », en anglais) 13 et un module COM de communication.

La mémoire morte 12 du dispositif de gestion DIS constitue un support d'enregistrement conforme à l'invention, lisible par le processeur 10 et sur lequel est enregistré un programme d'ordinateur PG2 conforme à l'invention comportant des instructions pour l'exécution des étapes d'un procédé de gestion d'une pluralité de messages selon l'invention, dont les étapes ont été détaillées en référence aux figures 1 et 2.

## Revendications

1. Procédé de gestion simultanée d'une pluralité de messages (M1, M2), mis en oeuvre par un dispositif (DIS), chacun desdits messages étant destiné à au moins un destinataire, chacun desdits messages étant édité dans une zone de saisie sélectionnée (Z1, Z2) dédiée à ce message, ledit procédé étant **caractérisé en ce que** chacune desdites zones est représentée comme une partie d'un même conteneur (CONT), ledit conteneur (CONT) constituant un objet graphique dans lequel un utilisateur peut éditer un contenu, la gestion d'un desdits messages (M1) comportant :
- une étape (E10) de création dynamique d'une zone de saisie (Z1) associée audit message (M1) dans ledit conteneur (CONT) ;
- une étape (E20) de sélection de ladite zone créée (Z1) ; et
- une étape (E30) d'édition dudit message (M1) dans ladite zone sélectionnée (Z1) ;
un envoi dudit message (M1) à son audit au moins un destinataire effaçant le contenu de ladite zone sélectionnée (Z1) contenant ce message, les contenus des zones de saisie (Z2) dédiés aux autres messages restant inchangés.

2. Procédé selon la revendication 1, dans lequel ladite étape (E10) de création dynamique et ladite étape (E20) de sélection de ladite zone (Z1) associée audit message (M1) sont simultanées.

3. Procédé selon l'une quelconque des revendications 1 ou 2, dans lequel pour la gestion d'au moins un message, ladite étape (E10) de création dynamique de ladite zone (Z1) s'effectue :
- par une action d'au moins un pointeur sur une interface (INT) ; ou
- automatiquement, lors de l'ouverture d'une application de messagerie mettant en oeuvre ledit procédé.

4. Procédé selon l'une quelconque des revendications 1 à 3, dans lequel au moins une desdites zones peut être détruite, ladite destruction s'effectuant :
- par une action d'au moins un pointeur sur une interface (INT) ;
- automatiquement, lors de l'envoi d'un message associé à ladite zone ; ou
- automatiquement, lors de la fermeture d'une application de messagerie mettant en oeuvre ledit procédé.

5. Procédé selon l'une quelconque des revendications 1 à 4, dans lequel ladite étape (E20) de sélection de ladite zone créée (Z1) comporte :
- une étape (E210) de défilement desdites zones (Z1, Z2) dans ledit conteneur (CONT) ; et
- une étape (E220) de pointage de ladite zone créée (Z1).

6. Procédé selon la revendication 5, dans lequel ladite étape (E210) de défilement correspond à une étape de translation desdites zones (Z1, Z2) dans ledit conteneur (CONT), ladite translation étant effectuée par un mouvement de glissement d'au moins un pointeur sur ledit conteneur (CONT).

7. Procédé selon la revendication 6 dans lequel ladite translation est effectuée selon la direction de saisie.

8. Procédé selon la revendication 5, dans lequel ladite étape (E210) de défilement correspond à une étape d'affichages successifs de chacune desdites zones (Z1, Z2) dans l'ensemble dudit conteneur (CONT), l'affichage de la zone suivante s'effectuant :
- par un contact d'au moins un pointeur sur au moins un bouton d'une interface (INT) ; ou
- par un double-contact d'au moins un pointeur sur ledit conteneur (CONT).

9. Procédé selon l'une quelconque des revendications 5 à 8, dans lequel ladite étape (E220) de pointage s'effectue :
- par au moins un contact d'au moins un pointeur sur ladite zone créée (Z1) ; ou
- automatiquement, lorsque ladite zone créée (Z1) occupe au moins une majorité dudit conteneur (CONT).

10. Procédé selon l'une quelconque des revendications 3, 4, 6-9, dans lequel ledit pointeur peut consister en :
- un doigt ; ou
- un stylet.

11. Dispositif (DIS) de gestion simultanée d'une pluralité de messages (M1, M2), chacun étant destiné à au moins un destinataire, chacun desdits messages étant édité dans une zone sélectionnée (Z1, Z2) dédiée à ce message, ledit dispositif étant **caractérisé en ce que** chacune desdites zones est représentée comme une partie d'un même conteneur (CONT), ledit conteneur (CONT) constituant un objet graphique dans lequel un utilisateur peut éditer un contenu, le module de gestion d'un desdits messages (M1) comportant :
- un module (CREA) de création dynamique d'une zone (Z1) associée audit message (M1) dans ledit conteneur (CONT) ;
- un module (SEL) de sélection de ladite zone créée (Z1) ; et
- un module (EDIT) d'édition dudit message (M1) dans ladite zone sélectionnée (Z1) ;
un envoi dudit message (M1) à son audit au moins un destinataire effaçant le contenu de ladite zone sélectionnée (Z1) contenant ce message, les contenus des zones de saisie (Z2) dédiées aux autres messages restant inchangés.

12. Programme d'ordinateur (PG) comportant des instructions pour l'exécution de toutes les étapes du procédé de gestion simultanée d'une pluralité de messages selon l'une quelconque des revendications à 1 à 10, lorsque ledit programme est exécuté par un ordinateur.

13. Support d'enregistrement (SUP) lisible par un ordinateur sur lequel est enregistré un programme d'ordinateur (PG) comprenant des instructions pour l'exécution de toutes les étapes du procédé de gestion simultanée d'une pluralité de messages selon l'une quelconque des revendications 1 à 10.

## Patentansprüche

1. Verfahren zum gleichzeitigen Lenken mehrerer Nachrichten (M1, M2), das von einer Vorrichtung (DIS) ausgeführt wird, wobei jede der Nachrichten für wenigstens einen Empfänger bestimmt ist, wobei jede der Nachrichten in einer ausgewählten Eingabezone (Z1, Z2), die dieser Nachricht zugeordnet ist, bearbeitet wird, wobei das Verfahren **dadurch gekennzeichnet ist, dass** jede der Zonen als ein Teil desselben Behälters (CONT) repräsentiert wird, wobei der Behälter (CONT) ein graphisches Objekt bildet, in dem ein Anwender einen Inhalt bearbeiten kann, wobei die Lenkung einer der Nachrichten (M1) Folgendes umfasst:
- einen Schritt (E10) des dynamischen Erzeugens einer Eingabezone (Z1), die der Nachricht (M1) in dem Behälter (CONT) zugeordnet ist;
- einen Schritt (E20) des Auswählens der erzeugten Zone (Z1); und
- einen Schritt (E30) des Bearbeitens der Nachricht (M1) in der ausgewählten Zone (Z1);
wobei das Schicken der Nachricht (M1) an ihren wenigstens einen Empfänger den Inhalt der ausgewählten Zone (Z1), die diese Nachricht enthält, löscht, wobei die Inhalte der Eingabezonen (Z2), die den anderen Nachrichten zugeordnet sind, unverändert bleiben.

2. Verfahren nach Anspruch 1, wobei der Schritt (E10) des dynamischen Erzeugens und der Schritt (E20) des Auswählens der Zone (Z1), die der Nachricht (M1) zugeordnet ist, gleichzeitig ausgeführt werden.

3. Verfahren nach einem der Ansprüche 1 oder 2, wobei für die Lenkung wenigstens einer Nachricht der Schritt (E10) des dynamischen Erzeugens der Zone (Z1)
- durch eine Wirkung wenigstens eines Zeigers auf einer Schnittstelle (INT); oder
- automatisch beim Öffnen einer Nachrichtenanwendung, die das Verfahren ausführt, ausgeführt wird.

4. Verfahren nach einem der Ansprüche 1 bis 3, wobei wenigstens eine der Zonen zerstört werden kann, wobei die Zerstörung
- durch eine Wirkung wenigstens eines Zeigers auf einer Schnittstelle (INT);
- automatisch beim Schicken einer Nachricht, die der Zone zugeordnet ist; oder
- automatisch beim Schließen einer Nachrichtenanwendung, die das Verfahren ausführt, ausgeführt wird.

5. Verfahren nach einem der Ansprüche 1 bis 4, wobei der Schritt (E20) des Auswählens der erzeugten Zone (Z1) Folgendes umfasst:
- einen Schritt (E210) des Vorbeibewegens der Zonen (Z1, Z2) in dem Behälter (CONT); und
- einen Schritt (E220) des Zeigens auf die erzeugte Zone (Z1).

6. Verfahren nach Anspruch 5, wobei der Schritt (E210) des Vorbeibewegens einem Schritt des translatorischen Bewegens der Zonen (Z1, Z2) in dem Behälter (CONT) entspricht, wobei die Translation durch eine Gleitbewegung wenigstens eines Zeigers auf dem Behälter (CONT) ausgeführt wird.

7. Verfahren Anspruch 6, wobei die Translation in der Eingaberichtung ausgeführt wird.

8. Verfahren Anspruch 5, wobei der Schritt (E210) des Vorbeibewegens einem Schritt des aufeinanderfolgenden Anzeigens jeder der Zonen (Z1, Z2) im gesamten Behälter (CONT) entspricht, wobei das Anzeigen der folgenden Zone
- durch einen Kontakt wenigstens eines Zeigers mit wenigstens einer Taste einer Schnittstelle (INT); oder
- durch einen Doppelkontakt wenigstens eines Zeigers mit dem Behälter (CONT)
ausgeführt wird.

9. Verfahren nach einem der Ansprüche 5 bis 8, wobei der Schritt (E220) des Zeigens
- durch wenigstens einen Kontakt wenigstens eines Zeigers mit der erzeugten Zone (Z1); oder
- automatisch dann, wenn die erzeugte Zone (Z1 wenigstens den größten Teil des Behälters (CONT) einnimmt,
ausgeführt wird.

10. Verfahren nach einem der Ansprüche 3, 4, 6-9, wobei der Zeiger bestehen kann aus:
- einem Finger; oder
- einem Stift.

11. Vorrichtung (DIS) zum gleichzeitigen Lenken mehrerer Nachrichten (M1, M2), wovon jede für wenigstens einen Empfänger bestimmt ist, wobei jede der Nachrichten in einer ausgewählten Zone (Z1, Z2), die dieser Nachricht zugeordnet ist, bearbeitet wird, wobei die Vorrichtung **dadurch gekennzeichnet ist, dass** jede der Zonen als ein Teil desselben Behälters (CONT) repräsentiert wird, wobei der Behälter (CONT) ein graphisches Objekt gebildet, in dem ein Anwender einen Inhalt bearbeiten kann, wobei das Modul für die Lenkung einer der Nachrichten (M1) Folgendes umfasst:
- ein Modul (CREA) zum dynamischen Erzeugen einer Zone (Z1), die der Nachricht (M1) zugeordnet ist, in dem Behälter (CONT);
- ein Modul (SEL) zum Auswählen der erzeugten Zone (Z1); und
- ein Modul (EDIT) zum Bearbeiten der Nachricht (M1) in der ausgewählten Zone (Z1);
wobei ein Schicken der Nachricht (M1) an ihren wenigstens einen Empfänger den Inhalt der ausgewählten Zone, (Z1), die diese Nachricht enthält, löscht, wobei die Inhalte der Eingabezonen (Z2), die den anderen Nachrichten zugeordnet sind, unverändert bleiben.

12. Computerprogramm (PG), das Befehle für die Ausführung aller Schritte des Verfahrens zum gleichzeitigen Lenken mehrerer Nachrichten nach einem der Ansprüche 1 bis 10, wenn das Programm durch einen Computer ausgeführt wird, enthält.

13. Aufzeichnungsträger (SUP), der durch einen Computer lesbar ist und auf dem ein Computerprogramm (PG) aufgezeichnet ist, das Befehle für die Ausführung aller Schritte des Verfahrens zum gleichzeitigen Lenken mehrerer Nachrichten nach einem der Ansprüche 1 bis 10 enthält.

## Claims

1. Method for simultaneous management of a plurality of messages (M1, M2), implemented by a device (DIS), each of said messages being destined for at least one recipient, each of said messages being edited within a selected input area (Z1, Z2) dedicated to this message, said method being **characterized in that** each of said areas is represented as a part of the same container (CONT), said container (CONT) constituting a graphical object in which a user can edit a content, the management of one of said messages (M1) comprising:
- a step (E10) for dynamic creation of an input area (Z1) associated with said message (M1) within said container (CONT);
- a step (E20) for selecting said created area (Z1); and
- a step (E30) for editing said message (M1) within said selected area (Z1);
a sending of said message (M1) to its said at least one recipient deleting the content of said selected area (Z1) containing this message, the contents of the input areas (Z2) dedicated to the other messages remaining unchanged.

2. Method according to Claim 1, in which said dynamic creation step (E10) and said step (E20) for selecting said zone (Z1) associated with said message (M1) are simultaneous.

3. Method according to either one of Claims 1 and 2, in which, for the management of at least one message, said step (E10) for dynamically creating said area (Z1) is carried out:
- by an action of at least one pointer on an interface (INT); or
- automatically, during the opening of a messaging application implementing said method.

4. Method according to any one of Claims 1 to 3, in which at least one of said areas may be destroyed, said destruction being carried out:
- by an action of at least one pointer on an interface (INT);
- automatically, during the sending of a message associated with said area; or
- automatically, during the closing of a messaging application implementing said method.

5. Method according to any one of Claims 1 to 4, in which said step (E20) for selecting said created area (Z1) comprises:
- a step (E210) for scrolling said areas (Z1, Z2) within said container (CONT); and
- a step (E220) for pointing to said created area (Z1) .

6. Method according to Claim 5, in which said scrolling step (E210) corresponds to a step for translation of said areas (Z1, Z2) within said container (CONT), said translation being carried out by a sliding movement of at least one pointer over said container (CONT).

7. Method according to Claim 6 in which said translation is carried out in the input direction.

8. Method according to Claim 5, in which said scrolling step (E210) corresponds to a step for successive display of each of said areas (Z1, Z2) within the whole of said container (CONT), the display of the next area being carried out:
- by a contact of at least one pointer on at least one button of an interface (INT); or
- by a double-contact of at least one pointer on said container (CONT).

9. Method according to any one of Claims 5 to 8, in which said pointing step (E220) is carried out:
- by at least one contact of at least one pointer on said created area (Z1); or
- automatically, when said created area (Z1) occupies at least a majority of said container (CONT).

10. Method according to any one of Claims 3, 4, 6-9, in which said pointer may consist of:
- a finger; or
- a stylus.

11. Device (DIS) for simultaneous management of a plurality of messages (M1, M2), each being destined for at least one recipient, each of said messages being edited within a selected area (Z1, Z2) dedicated to this message, said device being **characterized in that** each of said areas is represented as a part of the same container (CONT), said container (CONT) constituting a graphical object within which a user can edit a content, the module for managing one of said messages (M1) comprising:
- a module (CREA) for dynamically creating an area (Z1) associated with said message (M1) within said container (CONT);
- a module (SEL) for selecting said created area (Z1); and
- a module (EDIT) for editing said message (M 1) within said selected area (Z1);
a sending of said message (M1) to its said at least one recipient deleting the content of said selected area (Z1) containing this message, the contents of the input areas (Z2) dedicated to the other messages remaining unchanged.

12. Computer programme (PG) comprising instructions for the execution of all the steps of the method for simultaneous management of a plurality of messages according to any one of Claims 1 to 10, when said programme is executed by a computer.

13. Recording medium (SUP) readable by a computer on which a computer programme (PG) is recorded comprising instructions for the execution of all the steps of the method for simultaneous management of a plurality of messages according to any one of Claims 1 to 10.
